# EUROPEAN PATENT SPECIFICATION

(11) **EP 1 857 300 B1**
(45) Date of publication and mention of the grant of the patent: **28.10.2009**
(21) Application number: 07108500.5
(22) Date of filing: 18.05.2007
(51) Int. Cl.: B60C 17/00

(54) **Vehicle run-flat tyre**
Notlaufreifen für ein Fahrzeug
Pneu de roulage à plat pour véhicule

(30) Priority: 19.05.2006 IT TO20060363
(43) Date of publication of application: 21.11.2007
(73) Proprietor: Marangoni Tyre S.p.A., 03012 Anagni (IT)
(72) Inventor: Marangoni, Mario, 38068 Rovereto (IT)
(74) Representative: Jorio, Paolo

(56) References cited:
- EP-A1- 1 167 081
- EP-A2- 1 400 374
- WO-A-00/13923
- US-A- 5 988 247

## Description

The present invention relates to a vehicle run-flat tyre, hereinafter abbreviated vehicle "RF tyre".

In particular, the present invention relates to a RF tyre of the type comprising a central annular portion, and two sidewalls, each of which has a bead portion comprising a bead bundle with a bead filler extending radially outwards of the bead bundle; the tyre comprising an external carcass defining an external portion of the central annular portion; and an internal carcass defining an internal portion of the central annular portion and the two sidewalls; the internal carcass comprising at least a first body ply having first annular end portions, each of which extends about the relative bead bundle and the relative bead filler; a toroidal continuous filler layer, in turn comprising a central annular belt extending along the central annular portion, outwards of the first body ply, and two lateral annular wings, each of which extends inwards of the relative sidewall to connect the central annular belt (25) to the relative bead filler; and a coating layer comprising an innerliner turned up about the bead bundles and two annular sidewall strips, each of which externally covers substantially the whole length of the relative first annular end portion, and extends into contact with the external carcass.

As is also known, though having the above structure, RF tyres are designed to function, in acceptable safety conditions and for a limited distance, even when partly or totally flat.

Known RF tyre art is substantially defined by: US-4,067,372, -4,261,405, -4,265,288, -4,287,924, -4,875,959, -5,088,539, -5,164,029, -5,215,612, -5,217,549, -5,238,040, -5,267,595, -5,361,820, -5,368,082, -5,427,166, -5,511,599, -2005205187, -2005217779;
EP- 0 385 192, -0 822 105, -0 842 795, -0 844 110, -0 924 109, -0 937 587, 0 938986, -0 943 466, -0 953 436, -1 022 162, -1 095 797, - 1 400 374, -1 424 219;
WO-97 01452, -99 36278, -99 48710, -2000 13923, 2004 058516, -2005 0053971, -2005 105419; and JP-3-143710, -2001163019, -2004276823, -2005161964.

In particular, a RF tyre of the type set forth above is disclosed in EP-1 400 374.

Examination of the dynamics of a RF tyre of the type set forth above, as it rolls substantially flat, shows that a radial strip of the central annular portion located at the footprint and parallel to the axis of rotation tends, not being supported by internal pressure, first to flatten, thus flexing the sidewalls outwards to increase the distance between the tops of the sidewalls, and then to flex inwards, thus flexing the sidewalls inwards and discharging the entire load on the outer periphery of the sidewalls. In other words, given the flexural stiffness of the sidewalls, the radial strip of the central portion behaves in the same way as a bistable mechanical element, which is normally flexed outwards, but clicks inwards on reaching the footprint, and then outwards again on leaving the footprint.

This is repeated, at each section of the tyre, for each turn of the tyre about its axis of rotation, and produces, at the lateral ends of the central portion and at the connection between each lateral annular wing of the continuous filler layer and the relevant bead filler, fatigue phenomena which, all other conditions being equal, are directly proportional to the stiffness of the sidewalls. In other words, the more efficient an RF tyre is in supporting the load when substantially flat, the faster it undergoes permanent damage precluding reuse.

It is an object of the present invention to provide an RF tyre which, in addition to safely performing the function for which it is designed (i.e. supporting load when substantially flat) for a longer time than normally requested (i.e. normally the time taken to travel 100 km at a maximum speed of 80 km/h), also undergoes no permanent structural damage during that time, and can therefore be reused when inflated.

According to the present invention, there is provided a vehicle run-flat tyre, as claimed in the accompanying independent Claim and preferably in any one of the Claims depending directly or indirectly on the independent Claims.

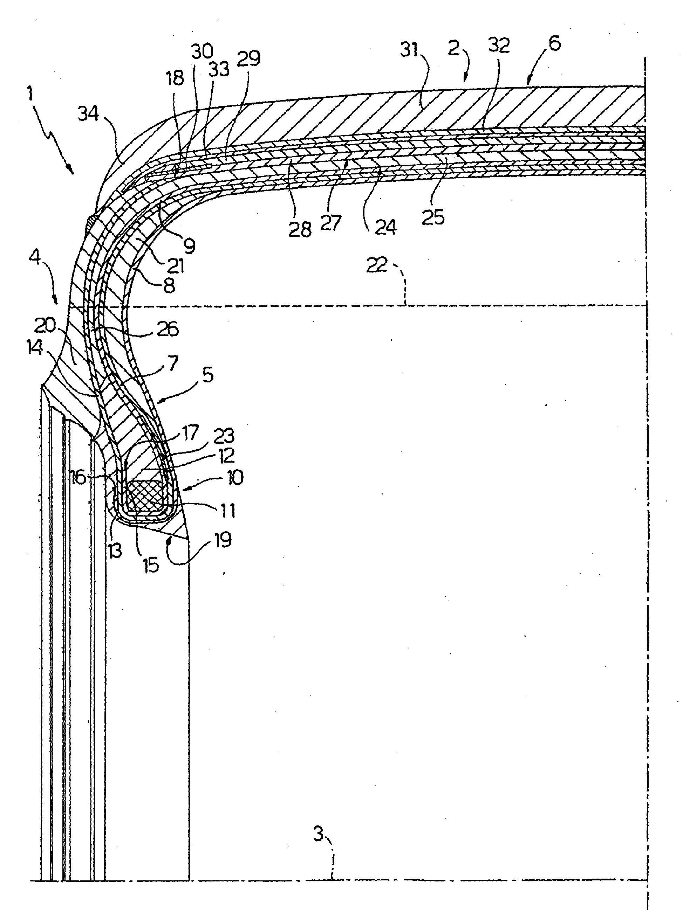

The present invention will be described with reference to the accompanying drawing showing a schematic axial half-section of a preferred embodiment.

Number 1 in the accompanying drawing indicates as a whole an RF tyre comprising a substantially cylindrical central annular portion 2 coaxial with an axis of rotation 3 of tyre 1; and two sidewalls 4, each of which lies substantially in a respective plane perpendicular to axis of rotation 3, and is connected at a radially outer end to the corresponding end of the other sidewall 4 by central annular portion 2.

Tyre 1 comprises a toroidal radial internal carcass 5 defining sidewalls 4 and a radially inner portion of central annular portion 2; and an external carcass 6 defining a radially outer portion of central annular portion 2.

Internal carcass 5 comprises an internal body ply 7, which is lined by an innerliner 8 impermeable to air and normally made from a butyl-base mix, and is covered externally with an external body ply 9 extending substantially in contact with the external surface of internal body ply 7. Internal body ply 7 and external body ply 9 are reinforced internally with cords, which may lie in radial planes or form a relatively small angle of at most 2-5° with a radial plane. In the latter case, the cords of one of plies 7 and 9 may lie in radial planes, and the cords of the other ply may be inclined. If the cords of both body plies 7 and 9 are inclined, they are oppositely inclined.

At its radially inner end, each sidewall 4 comprises an annular bead portion 10 coaxial with axis of rotation 3 and in turn comprising a bead bundle 11, which is coaxial with axis of rotation 3, is normally made of metal, and is fitted along its outer periphery with a substantially triangular bead filler 12 made of elastomeric material, with its base connected to bead bundle 11, and its apex facing radially outwards.

At each bead portion 10, innerliner 8, internal body ply 7, and external body ply 9 have respective annular end portions 13, 14, 15 turned up about relative bead bundle 11 and relative bead filler 12.

Annular portion 13 has a free edge 16 located radially inwards of the radially outer surface of relative bead bundle 11; annular portion 15 extends in contact with relative bead bundle 11 and a radially inner portion of relative bead filler 12, and has a free edge 17 located radially outwards of relative bead bundle 11 and radially inwards of a radially outer end of relative bead filler 12; and annular portion 14 extends along the whole of relative sidewall 4, and has a free edge 18 substantially at a respective lateral edge of central annular portion 2.

Innerliner 8 forms the central portion of a coating layer 19 comprising, for each sidewall 4, an annular sidewall strip 20, which covers relative annular end portion 13 of innerliner 8, extends in a U about relative bead bundle 11, and covers the axially outer surface of relative annular end portion 14 of internal body ply 7 substantially up to relative free edge 18.

Inside each sidewall 4, internal carcass 5 comprises a falcate filler 21, which is located with its radially outer end substantially at a respective lateral edge of central annular portion 2, with its radially inner end positioned radially outwards of and close to relative free edge 17, is of maximum thickness at a maximum chord 22 of tyre 1, and is interposed between innerliner 8 and the axially inner surface of internal body ply 7. Between plies 7 and 9 - more specifically, between the portions of plies 7 and 9 interposed between each falcate filler 21 and relative bead filler 12 - an annular reinforcing strip 23, preferably made of textile material, is inserted to reduce shear stress between plies 7 and 9.

Finally, internal carcass 5 comprises a toroidal continuous filler layer 24, in turn comprising a central annular belt 25 extending along central annular portion 2 and in contact with the radially outer surface of external body ply 9; and two annular end portions or wings 26, each of which extends inside relative sidewall 4 to connect central annular belt 25 to relative bead filler 12, and is interposed between external body ply 9 and relative annular end portion 14 of internal body ply 7.

In a variation not shown, a single body ply, of the same design as internal body ply 7, is substituted for body plies 7 and 9, and continuous filler layer 24 is positioned contacting the external surface of the single body ply.

External carcass 6 comprises a tread belt 27 located at central portion 2, and in turn comprising an internal tread ply 28 resting directly on central annular belt 25 of continuous filler layer 24, and having opposite lateral portions, each resting on free edge 18 of relative annular end portion 14 of internal body ply 7, and on the radially outer edge of relative annular sidewall strip 20; and an external tread ply 29 contacting the external surface of internal tread ply 28, and narrower than internal tread ply 28. Tread plies 28 and 29 are reinforced with normally oppositely-inclined wires (not shown), and are separated, over each free edge 18, by an annular reinforcing strip 30 preferably made of textile material.

Finally, external carcass 6 comprises a tread 31 located at central portion 2, outwards of tread belt 27, and which rests on external ply 29 with the interposition of a cushion 32 and a so-called "0° ply" 33 or, in a variation not shown, a number of plies 33. Tread 31 has two lateral shoulders 34, each covering a radially outer portion of relative annular sidewall strip 20.

The Table below shows the chemical-physical characteristics of some of the main components of tyre 1:

| COMPONENTS | "Filler 12" | Falcate filler 21 | Continuous layer 24 | Tread 31 |
|---|---|---|---|---|
| Polyisoprene | 40 - 100 | 40 - 100 | 40 - 100 | 0 - 40 |
| Natural rubber | 40 - 100 | 40 - 100 | 40 - 100 | 0 - 40 |
| 1,4 cis polybutadiene | | 20 - 60 | | 0 - 20 |
| E-SBR | 0 - 40 | 0 - 40 | 0 - 50 | 40 - 100 |
| Carbon black | 60 - 100 | 50 - 90 | 50 - 90 | 60 - 90 |
| Precipitated hydrous silica | | 0 - 80 | 40 - 80 | 40 - 90 |
| Aramidic fibre pulp | 2 -20 | 2 -20 | 2 -20 | |
| 100% MPa modulus ⁽¹⁾ | 6 - 8 | 3 - 5 | 3 - 6 | 1 - 3 |
| Shore A hardness ⁽²⁾ | min 90 | 65 - 85 | 65 - 85 | 52 - 62 |
| Elastic rebound (%) ⁽³⁾ | min 40 | min 40 | min 45 | min 30 |
| E¹ (MPa) @ 60°C 10Hz | 20 - 50 | 5 - 10 | 5 - 15 | 2 - 6 |
| T and @ 60°C 10Hz ⁽⁴⁾ | <0.300 | <0.250 | <0.250 | <0.350 |

| | | | | |
|---|---|---|---|---|
| (1) → Tension Modulus Test ASTM D412 (=-ring) (2) → Shore A Hardness Test ASTM D2240 (3) → Campana Elastic Rebound (4) → DMA Flexometer 500N | | | | |

As will be clear from the structure of tyre 1 and the above-listed characteristics, inserting continuous filler layer 24 and falcate fillers 21:
- increases the moment of inertia of central annular portion 2, as compared with corresponding known tyres, so that central annular portion 2 moves more slowly and to a lesser degree with respect to sidewalls 4;
- prevents central portion 2 from acting like a bistable mechanical element, by keeping it slightly flexed outwards at all times, even when the tyre is flat, so that it also participates in absorbing load, thus greatly improving run-flat driving comfort;
- provides, for a given stiffness of sidewalls 4, for more elastic connection between sidewalls 4 and central annular portion 2, and between bead fillers 12 and filler layer 24, thus reducing fatigue stress concentrations and, hence, the likelihood of damage, along the lateral edges of central annular strip 2, capable of precluding reuse of the tyre;
- forms, inside tyre 1, a continuous portal-like core allowing interaction between all the component parts of tyre 1, and so greatly improving driving comfort when the tyre is partly or totally flat.

## Claims

1. A vehicle run-flat tyre, the tyre (1) comprising a central annular portion (2), and two sidewalls (4), each of which has a bead portion (10) comprising a bead bundle (11) with a bead filler (12) extending radially outwards of the bead bundle (11); the tyre (1) comprising an external carcass (6) defining an external portion of the central annular portion (2); and an internal carcass (5) defining an internal portion of the central annular portion (2) and the two sidewalls (4); the internal carcass comprising at least a first body ply (7) having first annular end portions (14), each of which extends about the relative bead bundle (11) and the relative bead filler (12); a toroidal continuous filler layer (24), in turn comprising a central annular belt (25) extending along the central annular portion (2), outwards of the first body ply (7), and two lateral annular wings (26), each of which extends inwards of the relative sidewall (4) to connect the central annular belt (25) to the relative bead filler (12); and a coating layer (19) comprising an innerliner (8) turned up about the bead bundles (11) and two annular sidewall strips (20), each of which externally covers substantially the whole length of the relative first annular end portion (14), and extends into contact with the external carcass (6); **the tyre being characterized in that** each sidewall (4) comprises a falcate filler (21) interposed between the innerliner (8) and the first body ply (7) and extending along both the relative bead filler (12) and the relative annular wing (26).

2. A tyre as claimed in Claim 1, and also comprising a second body ply (9) located between the first body ply (7) and the continuous filler layer (24), and having second annular end portions (15), each of which extends about the relative bead bundle (11) and relative bead filler (12).

3. A tyre as claimed in Claim 1 or 2, wherein the central annular belt (25) of the continuous filler layer (24) extends in contact with the external carcass (6).

4. A tyre as claimed in Claim 2 or 3, wherein the central annular belt (25) of the continuous filler layer (24) extends in contact with the second body ply (9).

5. A tyre as claimed in one of Claims 2 to 4, wherein each first annular end portion (14) is longer than the relative second annular end portion (15); each annular wing (26) of the continuous filler layer (24) being interposed between the relative first annular end portion (14) and the second body ply (9).

6. A tyre as claimed in one of the foregoing Claims, wherein each first annular end portion (14) extends along the relative sidewall (4) into contact with the external carcass (6).

7. A tyre as claimed in one of Claims 2 to 6, wherein each second annular end portion (15) has a free edge (17) located radially outwards of the relative bead bundle (11) and radially inwards of a radially outer end of the relative bead filler (12).

8. A tyre as claimed in one of the foregoing Claims, wherein the external carcass (6) comprises a tread belt (27) extending in contact with the central annular belt (25) of the continuous filler layer (24).

9. A tyre as claimed in Claim 8, wherein the tread belt (27) extends in contact with a radially outer free edge (18) of each first annular end portion (14).

10. A tyre as claimed in Claim 8 or 9, wherein the tread belt (27) extends in contact with a radially outer end of each annular sidewall strip (20).

11. A tyre as claimed in one of Claims 8 to 10, wherein the tread belt (27) comprises a first tread ply (28), and at least a second tread ply (29) superimposed on the first; the second tread ply (29) being narrower than the first, and having opposite lateral edges, each of which rests on the first tread ply (28) with the interposition of a respective annular reinforcing strip (30).

12. A tyre as claimed in one of the foregoing Claims, wherein each falcate filler (21) is positioned with its radially outer end substantially at a respective lateral edge of the central annular portion (2), and is of maximum thickness at a maximum chord (22) of the tyre (1).

13. A tyre as claimed in Claims 2 and 12, wherein an annular reinforcing strip (23) is interposed between the body plies (7, 9), at the portions of the body plies (7, 9) located between each falcate filler (21) and the relative bead filler (12).

## Patentansprüche

1. Notlaufreifen für ein Fahrzeug, wobei der Reifen (1) umfasst: einen zentralen ringförmigen Abschnitt (2) und zwei Seitenwände (4), von denen jede einen Wulstabschnitt (10) hat, der einen Wulstkern (11) mit einem Wulstfüllmaterial (12) umfasst, das sich von dem Wulstkern (11) radial auswärts erstreckt; wobei der Reifen (1) einen äußeren Unterbau (6), der einen Außenabschnitt des zentralen ringförmigen Abschnitts (2) definiert bzw. begrenzt, umfasst; und einen inneren Unterbau (5), der einen Innenabschnitt des zentralen ringförmigen Abschnitts (2) und die zwei Seitenwände (4) definiert; wobei der innere Unterbau wenigstens eine erste Karkassenlage (7) mit ersten ringförmigen Endabschnitten (14) umfasst, von denen sich jeder um den jeweiligen Wulstkern (11) und das jeweilige Wulstfüllmaterial (12) erstreckt; eine ringförmige kontinuierliche Füllmaterialschicht (24), die ihrerseits umfasst: einen zentralen ringförmigen Gurt (25), der sich entlang des zentralen ringförmigen Abschnitts (2) auswärts von der ersten Karkassenlage (7) erstreckt, und zwei seitliche ringförmige Flügel (26), von denen sich jeder einwärts von der jeweiligen Seitenwand (4) erstreckt, um den zentralen ringförmigen Gurt (25) mit dem zugehörigen Wulstfüllmaterial (12) zu verbinden; und eine Überzugsschicht (19), die eine Innenauskleidung (8), die um die Wulstkerne (11) gebündelt ist, und zwei ringförmige Seitenwandbänder (20) umfasst, von denen jedes im Wesentlichen die gesamte Länge des jeweiligen ersten ringförmigen Endabschnitts (14) bedeckt und sich in Kontakt mit dem äußeren Unterbau (6) erstreckt; wobei der Reifen **dadurch gekennzeichnet ist, dass** jede Seitenwand (4) ein sichelförmiges Füllmaterial (21) umfasst, das zwischen der Innenauskleidung (8) und der ersten Karkassenlage (7) eingefügt ist und sich sowohl entlang des jeweiligen Wulstfüllmaterials (7) als auch des jeweiligen ringförmigen Flügels (26) erstreckt.

2. Reifen nach Anspruch 1, der auch eine zweite Karkassenlage (9) umfasst, die zwischen der ersten Karkassenlage (7) und der kontinuierlichen Füllmaterialschicht (24) angeordnet ist und zweite ringförmige Endabschnitte (15) hat, von denen sich jeder um den jeweiligen Wulstkern (11) und das jeweilige Wulstfüllmaterial (12) erstreckt.

3. Reifen nach Anspruch 1 oder 2, wobei der zentrale ringförmige Gurt (25) der kontinuierlichen Füllmaterialschicht (24) sich in Kontakt mit dem äußeren Unterbau (3) erstreckt.

4. Reifen nach Anspruch 2 oder 3, wobei der zentrale ringförmige Gurt (25) der kontinuierlichen Füllmaterialschicht (24) sich in Kontakt mit der zweiten Karkassenschicht (9) erstreckt.

5. Reifen nach einem der Ansprüche 2 bis 4, wobei jeder erste ringförmige Endabschnitt (14) länger als der jeweilige zweite ringförmige Endabschnitt (15) ist; wobei jeder ringförmige Flügel (26) der kontinuierlichen Füllmaterialschicht (24) zwischen dem jeweiligen ersten ringförmigen Endabschnitt (14) und der zweiten Karkassenlage (9) eingefügt ist.

6. Reifen nach einem der vorangehenden Ansprüche, wobei jeder erste ringförmige Endabschnitt (14) sich entlang der jeweiligen Seitenwand (4) in Kontakt mit dem äußeren Unterbau (6) erstreckt.

7. Reifen nach einem der Ansprüche 2 bis 6, wobei jeder zweite ringförmige Endabschnitt (15) einen freien Rand (17) hat, der sich radial auswärts von dem jeweiligen Wulstkern (11) und radial einwärts von dem radial äußeren eEde des jeweiligen Wulstfüllmaterials (12) befindet.

8. Reifen nach einem der vorangehenden Ansprüche, wobei der äußere Unterbau (6) einen Profilgurt (27) umfasst, der sich in Kontakt mit dem zentralen ringförmigen Gurt (25) der kontinuierlichen Füllmaterialschicht (24) erstreckt.

9. Reifen nach Anspruch 8, wobei der Profilgurt (27) sich in Kontakt mit einem radial äußeren freien Rand (18) jedes ersten ringförmigen Endabschnitts (14) erstreckt.

10. Reifen nach Anspruch 8 oder 9, wobei der Profilgurt (27) sich in Kontakt mit einem radial äußeren Ende jedes ringförmigen Seitenwandbands (20) erstreckt.

11. Reifen nach einem der Ansprüche 8 bis 10, wobei der Profilgurt (27) eine erste Profillage (28) und wenigstens eine zweite Profillage (29) umfasst, die auf der ersten überlagert ist; wobei die zweite Profillage (29) schmaler als die erste ist und entgegengesetzte Seitenränder hat, von denen jeder auf der ersten Gurtlage (28) ruht, wobei ein jeweiliges ringförmiges Verstärkungsband (30) dazwischen eingefügt ist.

12. Reifen nach einem der vorangehenden Ansprüche, wobei jedes sichelförmige Füllmaterial mit seinem radial äußeren Ende im Wesentlichen an einem jeweiligen Seitenrand des zentralen ringförmigen Abschnitts (2) positioniert ist und eine maximale Dicke an einer maximalen Kreissehne (22) des Reifens (1) hat.

13. Reifen nach Anspruch 2 und 12, wobei ein ringförmiges Verstärkungsband (23) zwischen den Karkassenlagen (7, 9) an den Positionen der Karkassenlagen (7, 9) eingefügt ist, die sich zwischen jedem sichelförmigen Füllmaterial (21) und dem jeweiligen Wulstfüllmaterial (12) befinden.

## Revendications

1. Pneu de roulage à plat pour véhicule, le pneu (1) comprenant une partie centrale (2) annulaire, et deux flancs (4), chacun d'eux comportant une partie de talon (10) comprenant une tringle (11) avec un bourrage sur tringle (12) s'étendant radialement vers l'extérieur de la tringle (11) ; le pneu (1) comprenant une carcasse externe (6) définissant une partie externe de la partie centrale (2) annulaire ; et une carcasse interne (5) définissant une partie interne de la partie centrale (2) annulaire et des deux flancs (4) ; la carcasse interne comprenant au moins une première nappe carcasse (7) comportant des premières parties d'extrémité (14) annulaires, chacune d'elles s'étendant autour de la tringle (11) relative et du bourrage sur tringle (12) relatif ; une couche de bourrage (24) continue toroïdale, comprenant à son tour une ceinture centrale (25) annulaire s'étendant le long de la partie centrale (2) annulaire, vers l'extérieur de la première nappe carcasse (7), et deux ailes latérales (26) annulaires, chacune d'elles s'étendant vers l'intérieur du flanc (4) relatif pour relier la ceinture centrale (25) annulaire au bourrage sur tringle (12) relatif ; et une couche de revêtement (19) comprenant un calandrage intérieur (8) relevé autour des tringles (11) et deux bandes de flanc (20) annulaires, chacune d'elles recouvrant extérieurement la longueur sensiblement entière de la première partie d'extrémité (14) annulaire relative, et s'étendant en contact avec la carcasse externe (6) ; le pneu étant **caractérisé en ce que** chaque flanc (4) comprend un bourrage falciforme (21) interposé entre le calandrage intérieur (8) et la première nappe carcasse (7) et s'étendant à la fois le long du bourrage sur tringle (12) relatif et de l'aile (26) annulaire relative.

2. Pneu selon la revendication 1, et comprenant également une deuxième nappe carcasse (9) située entre la première nappe carcasse (7) et la couche de bourrage (24) continue, et comportant des deuxièmes parties d'extrémité (15) annulaires, chacune d'elles s'étendant autour de la tringle (11) relative et du bourrage sur tringle (12) relatif.

3. Pneu selon la revendication 1 ou 2, dans lequel la ceinture centrale (25) annulaire de la couche de bourrage (24) continue s'étend en contact avec la carcasse externe (6).

4. Pneu selon la revendication 2 ou 3, dans lequel la ceinture centrale (25) annulaire de la couche de bourrage (24) continue s'étend en contact avec la deuxième nappe carcasse (9).

5. Pneu selon l'une des revendications 2 à 4, dans lequel chaque première partie d'extrémité (14) annulaire est plus longue que la deuxième partie d'extrémité (15) annulaire relative ; chaque aile (26) annulaire de la couche de bourrage (24) continue étant interposée entre la première partie d'extrémité (14) annulaire relative et la deuxième nappe carcasse (9).

6. Pneu selon l'une des revendications précédentes, dans lequel chaque première partie d'extrémité (14) annulaire s'étend le long du flanc (4) relatif en contact avec la carcasse externe (6).

7. Pneu selon l'une des revendications 2 à 6, dans lequel chaque deuxième partie d'extrémité (15) annulaire comporte un bord libre (17) situé radialement vers l'extérieur de la tringle (11) relative et radialement vers l'intérieur d'une extrémité radialement externe du bourrage sur tringle (12) relatif.

8. Pneu selon l'une des revendications précédentes, dans lequel la carcasse externe (6) comprend une ceinture de bande de roulement (27) s'étendant en contact avec la ceinture centrale (25) annulaire de la couche de bourrage (24) continue.

9. Pneu selon la revendication 8, dans lequel la ceinture de bande de roulement (27) s'étend en contact avec un bord libre (18) radialement externe de chaque première partie d'extrémité (14) annulaire.

10. Pneu selon la revendication 8 ou 9, dans lequel la ceinture de bande de roulement (27) s'étend en contact avec une extrémité radialement externe de chaque bande de flanc (20) annulaire.

11. Pneu selon l'une des revendications 8 à 10, dans lequel la ceinture de bande de roulement (27) comprend une première nappe de bande de roulement (28), et au moins une deuxième nappe de bande de roulement (29) superposée à la première ; la deuxième nappe de bande de roulement (29) étant plus étroite que la première, et comportant des bords latéraux opposés, chacun d'eux reposant sur la première nappe de bande de roulement (28), avec l'interposition d'une bande de renforcement (30) annulaire respective.

12. Pneu selon l'une des revendications précédentes, dans lequel chaque bourrage falciforme (21) est positionné avec son extrémité radialement externe sensiblement au niveau d'un bord latéral respectif de la partie centrale (2) annulaire, et a une épaisseur maximum au niveau d'une corde (22) maximum du pneu (1).

13. Pneu selon les revendications 2 et 12, dans lequel une bande de renforcement (23) annulaire est interposée entre les nappes carcasses (7, 9), au niveau des parties des nappes carcasses (7, 9) situées entre chaque bourrage falciforme (21) et le bourrage sur tringle (12) relatif.
